Europäisches Patentamt

European Patent Office

Office européen des brevets

(19)

(11) **EP 1 359 434 B1**

(12) **FASCICULE DE BREVET EUROPEEN**

(45) Date de publication et mention
de la délivrance du brevet:
**11.10.2006 Bulletin 2006/41**

(51) Int Cl.:
***G01S 13/02*** *(2006.01)*     ***G06F 9/46*** *(2006.01)*

(21) Numéro de dépôt: **03101090.3**

(22) Date de dépôt: **18.04.2003**

(54) **Procédé d'ordonnancement de pointages pour un radar multifonction, un sonar ou pour un lidar**

Strahl-Scheduler Methode für ein Multi-Funktionsradar, sonar oder lidar

Beam scheduling method for a multifunction radar, sonar or lidar

(84) Etats contractants désignés:
**AT BE BG CH CY CZ DE DK EE ES FI FR GB GR
HU IE IT LI LU MC NL PT RO SE SI SK TR**

(30) Priorité: **03.05.2002 FR 0205579**

(43) Date de publication de la demande:
**05.11.2003 Bulletin 2003/45**

(73) Titulaire: **Thales**
**75008 Paris (FR)**

(72) Inventeur: **DELTOUR, Jean-Claude**
**94117 CX, ARCUEIL (FR)**

(74) Mandataire: **Lucas, Laurent Jacques et al**
**Marks & Clerk France**
**31-33 Avenue Aristide Briand**
**94117 Arcueil Cédex (FR)**

(56) Documents cités:
**US-A- 3 587 054**

• HUIZING A G ET AL: "An efficient scheduling
algorithm for a multifunction radar" 1996 IEEE
INTERNATIONAL SYMPOSIUM ON PHASED
ARRAY SYSTEMS AND TECHNOLOGY.
REVOLUTIONARY DEVELOPMENTS IN PHASED
ARRAYS (CAT. NO.96TH8175), PROCEEDINGS
OF INTERNATIONAL SYMPOSIUM ON PHASED
ARRAY SYSTEMS AND TECHNOLOGY,
BOSTON, MA, USA, 15-18 OCT. 1996, pages
359-364, XP002227490 1996, New York, NY, USA,
IEEE, USA ISBN: 0-7803-3232-6

• BARBATO A ET AL: "An improved scheduling
algorithm for a naval phased array radar"
INTERNATIONAL CONFERENCE RADAR 92
(CONF. PUBL. NO.365), BRIGHTON, UK, 12-13
OCT. 1992, pages 42-45, XP002227491 1992,
London, UK, IEE, UK ISBN: 0-85296-553-2

• ZHANG BOYAN ET AL: "Computer control
techniques of phased array radars" JOURNAL OF
SYSTEMS ENGINEERING AND ELECTRONICS,
1998, CHINA OCEAN PRESS BEIJING, CHINA,
vol. 9, no. 1, pages 30-36, XP002227492 ISSN:
1004-4132

• CHIN-FU KUO ET AL: "Real-time digital signal
processing of component-oriented phased array
radars" PROCEEDINGS 21ST IEEE REAL-TIME
SYSTEMS SYMPOSIUM, PROCEEDINGS REAL-
TIME SYSTEMS SYMPOSIUM, ORLANDO, FL,
USA, 27-30 NOV. 2000, pages 99-108,
XP002227493 2000, Piscataway, NJ, USA, IEEE,
USA ISBN: 0-7695-0900-2

• KOROUSIC-SELJAK B: "TASK SCHEDULING
POLICIES FOR REAL-TIME SYSTEMS"
MICROPROCESSORS AND MICROSYSTEMS,
IPC BUSINESS PRESS LTD. LONDON, GB, vol.
18, no. 9, 1 novembre 1994 (1994-11-01), pages
501-511, XP000483414 ISSN: 0141-9331

EP 1 359 434 B1

**Description**

La présente invention concerne un procédé d'ordonnancement de tâches en deux passes. Elle s'applique notamment à l'ordonnancement de pointages d'un radar, d'un sonar ou d'un lidar.

Dans un radar à balayage électronique, les tâches à ordonnancer sont les pointages du radar. Un radar à balayage électronique peut dépointer son faisceau de façon instantanée dans un cône d'axe perpendiculaire au plan de l'antenne. Il existe des radars multifonctions. Un radar multifonction possède différents modes de fonctionnement (antenne tournante, antenne arrêtée, mode mixte, antenne multi-dales...) et effectue plusieurs types de pointages. Ces différents types de pointages correspondent à différentes missions opérationnelles : la détection (pointages de veille), le pistage de cibles (pointages de poursuite), l'identification, le guidage de missiles...

Un radar comprend généralement un générateur de requêtes, qui traduit les missions en pointages. A une mission de veille correspondent des pointages permettant de mailler un espace de veille. A une mission de poursuite correspond un ou plusieurs pointages permettant de suivre une piste. Les pointages des missions de veille et des missions de poursuite sont destinés à être exécutés de manière périodique. Il existe aussi des pointages dont l'exécution est sporadique, notamment les pointages de confirmation (suite à une détection lors d'une veille) et les pointages de ré-acquisition (suite à une non détection lors d'une poursuite). Ces pointages sporadiques peuvent être prioritaires par rapport aux pointages périodiques.

L'ordonnancement est la détermination de l'ordre d'exécution des pointages, périodiques ou sporadiques. Afin d'ordonnancer les pointages, on peut construire des trames de longueurs temporelles déterminées. Lorsqu'une trame est en train de se construire, la précédente est exécutée par le radar. Cet ordonnancement fonctionne donc en temps réel, car le temps nécessaire à la construction d'une trame doit être inférieur à la durée d'exécution de la précédente par le radar. A cet effet, il est nécessaire d'utiliser un algorithme rapide, basé sur une politique d'ordonnancement simple. Ceci permet à cet algorithme de fonctionner en un temps restreint, compatible avec les contraintes imposées par l'exécution en temps réel.

Toutefois, cette manière d'ordonnancer les pointages ne permet pas, pendant la durée de construction d'une trame, de prendre en compte de nouveaux pointages. Il existe donc un temps de latence proportionnel à la longueur d'une trame.

Il est donc souhaitable de diminuer ce temps de latence. Or ceci réduit d'autant le temps disponible pour effectuer l'ordonnancement. Or l'ordonnancement temporel des pointages est un problème d'optimisation multicritère, qui consiste à la fois à maximiser la charge (c'est à dire exécuter un maximum de pointages) du radar et à exécuter les pointages les plus importants. Etant donné la combinatoire exponentielle de ce problème, il n'existe pas d'algorithme permettant, en un temps restreint, de donner une solution optimale.

Une demande de brevet US 3 587 054 décrit un procédé d'ordonnancement appliqué à un radar.

Par ses caractéristiques, telles qu'elles seront décrites et revendiquées ci-après, l'invention vise à ordonnancer des tâches de façon rapide pour diminuer le temps de latence, et ce en évitant de générer des temps morts.

Pour satisfaire à cet objectif et obtenir d'autres avantages qui ressortiront plus loin, l'invention a pour objet un procédé d'ordonnancement de tâches tel que décrit par la revendication 1.

Avantageusement, lors de la seconde passe on réalise un filtrage, ce filtrage étant appliqué à la première liste ou à une partie de celle-ci, le résultat de ce filtrage étant une liste ne contenant que des tâches non urgentes.

Avantageusement, lors de la première passe on réalise un filtrage sur les priorités, ce filtrage étant appliqué à la première liste ou à une partie de celle-ci, le résultat de ce filtrage étant une liste ne contenant que les tâches dont la priorité est supérieure ou égale à une priorité déterminée.

Avantageusement, le résultat de ce filtrage sur les priorités ne contient que les tâches dont la priorité est maximale.

Avantageusement, lors de la première passe ou de la seconde passe on réalise un filtrage temporel, ce filtrage étant appliqué à la première liste ou à une partie de celle-ci, le résultat de ce filtrage étant une liste ne contenant que les tâches dont les contraintes temporelles respectent un critère déterminé.

Avantageusement, si toutes les tâches auxquelles est appliqué le filtrage temporel sont des tâches périodiques, le résultat de ce filtrage ne contient que les tâches dont le rapport entre le délai jusqu'à la dernière date d'exécution d'une part, et la période de la tâche d'autre part, est le plus grand.

Avantageusement, la seconde passe ne comprend pas de filtrage sur les priorités.

L'invention sera maintenant décrite de manière plus détaillée dans le cadre d'un exemple particulier de mise en oeuvre pratique appliquée à un radar. Dans le cours de cette description, on fera référence aux figures des dessins annexés, parmi lesquelles :

- la figure 1, un diagramme fonctionnel, représente des étapes de filtrage d'un exemple de procédé selon l'invention ;
- la figure 2, un diagramme d'ensembles, représente des listes de tâches résultant d'une mise en oeuvre à un instant donné du procédé illustré figure 1.

On distingue les tâches de nature sporadique des tâches de nature périodique.

Les tâches de nature sporadique sont destinées à être exécutées entre deux dates. La première date est appelée la date d'activation de la tâche. Le début d'exécution d'une tâche sporadique suit normalement la date d'activation de cette tâche. En d'autres termes, la date d'activation d'une tâche sporadique est la date à partir de laquelle la tâche devient éligible. La seconde date est appelée la date d'échéance de la tâche. La fin d'exécution d'une tâche sporadique précède normalement la date d'échéance de cette tâche.

Les tâches de nature périodique sont destinées à être exécutées à intervalle de temps régulier. On associe à chaque tâche périodique, par analogie avec les tâches sporadiques, une date d'activation et une date d'échéance. Ces dates d'activation et d'échéance sont déterminées pour chaque période, c'est à dire pour chaque occurrence de la tâche.

Une tâche est soumise à des contraintes temporelles plus ou moins fortes. On distingue les tâches urgentes des tâches non urgentes.

Une tâche urgente est une tâche devant impérativement être exécutées entre sa date d'activation et sa date d'échéance. Une tâche non urgente est une tâche pouvant être exécutée en dehors de sa date d'activation et de sa date d'échéance. En d'autres termes, le début d'exécution d'une tâche non urgente peut précéder sa date d'activation, et la fin d'exécution d'une tâche non urgente peut suivre sa date d'échéance.

En général, les tâches urgentes sont de nature sporadique et les tâches non urgentes sont de nature périodique. En d'autres termes, les contraintes temporelles des tâches périodiques sont généralement moins strictes que celles des tâches sporadiques. Il est donc possible d'exécuter une tâche périodique avant sa date d'activation ou après sa date d'échéance.

On attribue à chaque tâche un degré de priorité. Ce degré de priorité peut être représenté par un nombre entier. Par exemple, une valeur basse correspond à une tâche peu prioritaire, une valeur élevée correspond à une tâche très prioritaire.

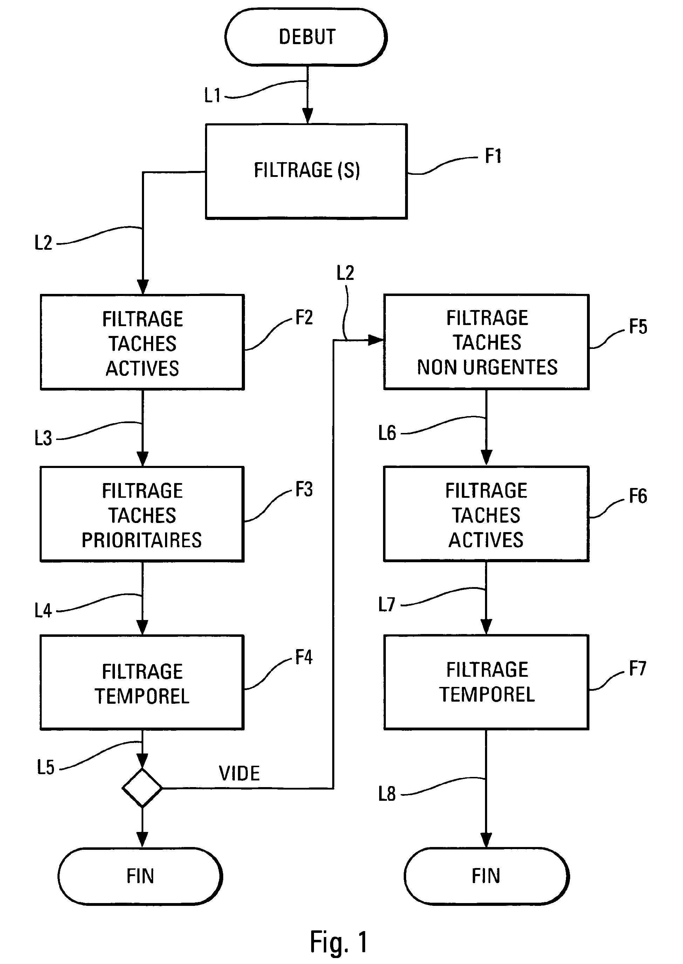

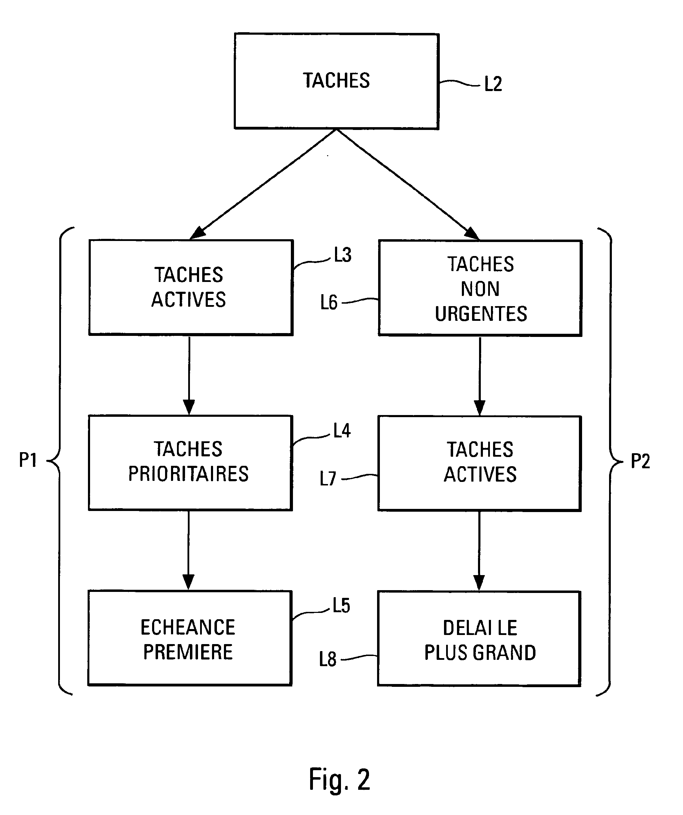

On se réfère aux figures 1 à 2. Le procédé d'ordonnancement selon l'invention permet de choisir la prochaine tâche à exécuter dans une liste L1, cette liste L1 contenant les tâches destinées à être ordonnancées. Le choix de la prochaine tâche à exécuter peut être réalisé en appliquant des filtrages successifs F1, F2, F3... selon des règles déterminées. Ces filtrages permettent de réduire peu à peu le nombre de tâches éligibles. On obtient au bout du compte très peu de tâches (voire une seule) ou aucune.

Selon l'invention, on réalise une première passe P1. La première passe P1 comprend au moins un filtrage. Cette première passe est appliquée à une première liste L2. Cette première liste L2 contient des tâches destinées à être ordonnancées. Cette première liste peut être la liste des tâches destinées à être ordonnancées L1. Cette première liste peut aussi (tel qu'illustré sur la figure 1) être une partie de celle-ci, résultant par exemple de la réalisation d'autres filtrages F1, ces autres filtrages F1 étant appliqués à la liste des tâches destinées à être ordonnancées L1.

Un filtrage F2 de cette première passe P1 vise à éliminer les tâches inactives. Il consiste à ne retenir que les tâches dont la date d'activation est inférieure ou égale au prochain temps libre H0 pour l'exécution d'une tâche. Le prochain temps libre d'exécution H0 est la première date à partir de laquelle il est possible d'exécuter une tâche. Le résultat de ce filtrage F2 est une liste de tâches actives L3, c'est à dire une liste qui ne comprend que des tâches (provenant de la liste auquel est appliqué le filtrage F2) dont la date d'activation est inférieure ou égale au prochain temps libre H0 pour l'exécution d'une tâche.

Avantageusement, la première passe peut comprendre d'autres filtrages. On peut réaliser par exemple un filtrage F3 qui vise à éliminer les tâches non prioritaires. Avantageusement, le filtrage F3 peut être réalisé après le filtrage F2 s'il reste plusieurs tâches dans la liste de tâches actives L3. En d'autres termes, le filtrage F3 peut être appliqué à la liste de tâches actives L3 ou une partie de celle-ci. Le résultat de ce filtrage est une liste de tâches prioritaires L4, c'est à dire une liste qui ne comprend que des tâches dont la priorité est supérieure à une priorité déterminée. Cette priorité déterminée peut être par exemple 80% de la priorité la plus haute des tâches auquel est appliqué ce filtrage F3.

Avantageusement, cette priorité déterminée est la priorité la plus haute des tâches auquel est appliqué ce filtrage F3. En d'autres termes, le résultat de ce filtrage sur les priorités ne contient que les tâches dont la priorité est maximale.

De préférence, on réalise le filtrage F2 qui vise à éliminer les tâches inactives avant le filtrage F3 qui vise à éliminer les tâches non prioritaires.

On peut réaliser par exemple un filtrage F4 qui vise à éliminer les tâches à partir de contraintes temporelles. Avantageusement, le filtrage F4 peut être réalisé après le filtrage F3 s'il reste plusieurs tâches dans la liste de tâches prioritaires L4. En d'autres termes, le filtrage F4 peut être appliqué à la liste de tâches prioritaires L4 ou à une partie de celle-ci. Le résultat de ce quatrième filtrage est une liste L5 ne comprenant que des tâches dont les contraintes temporelles respectent un critère déterminé. Ce critère peut être par exemple la date d'échéance la plus proche. Dans ce cas, le filtrage F4 consiste à ne retenir que les tâches dont la date d'échéance est la plus proche. Avantageusement, si la liste L4 ne contient que des tâches périodiques, le critère peut par exemple être de minimiser l'écart avec la période nominale. Dans ce cas, le filtrage F4 consiste à ne retenir que les tâches dont le rapport entre le délai jusqu'à la dernière date d'exécution d'une part, et la période de la tâche d'autre part, est le plus grand.

Si à l'issue de cette première passe P1 on obtient une liste L5 contenant au moins une tâche, on choisit dans cette liste la prochaine tâche à exécuter. S'il reste plusieurs tâches, on peut en choisir une indifféremment. Cette tâche pourra s'exécuter directement, c'est à dire au prochain temps libre H0 pour l'exécution d'une tâche.

Sinon (il ne reste aucune tâche), aucune tâche ne peut être choisie à l'issue de la première passe P1. Plutôt que de générer un temps mort, c'est à dire après un intervalle de temps pendant lequel aucune tâche n'est exécutée, on réalise une deuxième passe P2. La deuxième passe est différente de la première passe. Elle est appliquée à la première liste L2. Cette deuxième passe comprend au moins un filtrage.

Un filtrage F6 de cette deuxième passe vise à éliminer les tâches inactives en utilisant des secondes dates d'activations plus souples, de manière à retenir davantage de tâches. Pour les tâches non urgentes, il est possible en effet de l'exécuter avant sa date d'activation. On détermine donc des secondes dates d'activations inférieures aux dates d'activations normales (celles utilisées lors de la première passe P1). Pour les tâches urgentes en revanche, les dates d'activations ne pouvant pas être modifiées, les secondes dates d'activations et les dates d'activations normales se confondent (on utilise les mêmes dates d'activations lors des deux passes P1, P2). Le résultat de ce filtrage F6 est une liste de tâches actives pour la deuxième passe L7, c'est à dire une liste qui ne comprend que des tâches dont la seconde date d'activation est inférieure ou égale au prochain temps libre H0 pour l'exécution d'une tâche.

Par exemple, pour chaque tâche périodique, la première date d'activation peut être déterminée par la relation :

$$T_{act1} = T_{exec} + T_{rec}$$

où

$T_{act1}$ représente la première date d'activation de la tâche,
$T_{exec}$ représente la dernière date d'exécution de la tâche,
$T_{rec}$ représente la période nominale de récurrence de la tâche.

Avantageusement, pour chaque tâche périodique, la seconde date d'activation est déterminée par la relation :

$$T_{act2} = T_{exec} + (1 - \varepsilon) \times T_{rec}$$

où

$T_{act2}$ représente la seconde date d'activation de la tâche ;
$\varepsilon$ représente un coefficient de fluctuation par rapport à la période nominale de la tâche, ce coefficient étant strictement inférieur à 1.

Le coefficient de fluctuation est un paramètre de contrôle. Il permet de contrôler la fluctuation induite autour de la période nominale. Il est possible d'utiliser une même valeur du coefficient de fluctuation pour toutes les tâches périodiques de manière à modifier de manière uniforme l'avancement relatif (à la période nominale) des dates d'activation.

Avantageusement, la seconde passe P2 peut comprendre d'autres filtrages. On peut réaliser par exemple un filtrage F5 qui vise à éliminer les tâches urgentes. En d'autres termes, le résultat du filtrage F5 est une liste ne contenant que des tâches non urgentes. Avantageusement, le filtrage F5 peut être réalisé avant le filtrage F6. En d'autres termes, le filtrage F6 peut être appliqué à la liste L6, résultat du filtrage F5, c'est à dire uniquement à des tâches non urgentes (dont la date d'activation pourra être modifiée).

Avantageusement, pour augmenter les chances de sélectionner une tâche lors de la seconde passe P2, la seconde passe P2 ne comprend aucun filtrage sur les priorités. Ceci permet d'augmenter la chance de sélectionner les tâches de faible priorité.

On peut réaliser par exemple un filtrage F7 qui vise à éliminer les tâches à partir de contraintes temporelles. Ce filtrage F7 de la seconde passe P2 est équivalent au filtrage F4 de la première passe. Avantageusement, le filtrage F7 peut être réalisé après le filtrage F6 s'il reste plusieurs tâches. En d'autres termes, le filtrage F7 peut être appliqué à la liste de tâches actives pour la deuxième passe L7 ou à une partie de celle-ci. Le résultat de ce filtrage F7 est une liste L8 ne comprenant que des tâches dont les contraintes temporelles respectent un critère déterminé, tel que pour le filtrage F4.

Lorsque toutes les tâches non urgentes sont des tâches périodiques, le filtrage F5 a pour effet de ne retenir que des tâches périodiques. Par conséquent, il est possible dans le filtrage temporel F7 d'appliquer le critère de minimisation l'écart avec la période nominale (délai relatif le plus grand).

Si à l'issue de cette deuxième passe P2 on obtient une liste L8 contenant au moins une tâche, on choisit la prochaine tâche à exécuter parmi les tâches de cette liste L8. S'il reste plusieurs tâches, on peut en choisir une indifféremment. Cette tâche pourra s'exécuter directement, c'est à dire au prochain temps libre H0 pour l'exécution d'une tâche. Sinon, on pourra générer un temps mort ou effectuer d'autres passes telles que la seconde passe P2.

Après avoir choisi une tâche on peut :

- si cette tâche est une tâche périodique : mettre à jour sa date d'activation et sa date d'échéance pour sa prochaine exécution, et le cas échéant d'autres données ;
- si cette tâche est une tâche sporadique : la supprimer de la liste L1.

Les tâches sporadiques dont la date d'échéance est dépassée peuvent être aussi supprimées de la liste L1. On peut ajouter de nouvelles tâches à la liste L1. On peut alors choisir la prochaine tâche à exécuter dans la liste L1 ainsi modifiée en appliquant à nouveau le procédé selon l'invention.

L'invention permet ainsi de s'affranchir du temps de latence lié à la construction de trames. Les tâches étant ordonnancées une à une, on peut prendre en compte de nouvelles tâches à chaque fois qu'une tâche est ordonnancée, c'est à dire dès que la prochaine tâche à exécuter est choisie.

**Revendications**

1. Procédé d'ordonnancement de tâches dans lequel :

   - on réalise une première passe (P1), cette première passe étant appliquée à une première liste (L2) contenant des tâches destinées à être ordonnancées, cette première passe comprenant au moins un filtrage (F2, F3, F4), un filtrage (F2) de cette première passe (P1) consistant à ne retenir que les tâches dont la date d'activation est inférieure ou égale au prochain temps libre H0 pour l'exécution d'une tâche ;
   - si à l'issue de cette première passe (P1) on obtient une liste (L5) contenant au moins une tâche, on choisit la prochaine tâche à exécuter parmi les tâches de cette liste (L5) ;
   - sinon, on réalise une deuxième passe (P2), cette deuxième passe étant appliquée à la première liste (L2), la seconde passe comprenant au moins un filtrage (F5, F6, F7), un filtrage (F6) de la seconde passe (P2) étant un filtrage sur des secondes dates d'activations consistant à ne retenir que les tâches dont la seconde date d'activation est inférieure ou égale au prochain temps libre H0 pour l'exécution d'une tâche, ces secondes dates d'activations pour les tâches non urgentes étant inférieures aux dates d'activations utilisées lors de la première passe (P1);

   **caractérisé en ce que**, pour chaque tâche périodique, la seconde date d'activation est déterminée par la relation :

$$T_{act2} = T_{exec} + (1 - \varepsilon) \times T_{rec}$$

   où

   $T_{act2}$ représente la seconde date d'activation de la tâche ;
   $T_{exec}$ représente la dernière date d'exécution de la tâche ;
   $\varepsilon$ représente un coefficient de fluctuation par rapport à la période nominale de la tâche, ce coefficient étant strictement inférieur à 1 ;
   $T_{rec}$ représente la période nominale de récurrence de la tâche.

2. Procédé selon la revendication 1, **caractérisé en ce que**, si à l'issue de la deuxième passe (P2) on obtient une liste (L8) contenant au moins une tâche, on choisit la prochaine tâche à exécuter parmi les tâches de cette liste (L8).

3. Procédé d'ordonnancement de tâches selon l'une quelconque des revendications précédentes, **caractérisé en ce que** lors de la seconde passe (P2) on réalise un filtrage (F5), ce filtrage étant appliqué à la première liste (L2) ou à une partie de celle-ci, le résultat de ce filtrage étant une liste (L6) ne contenant que des tâches non urgentes.

**4.** Procédé d'ordonnancement de tâches selon l'une quelconque des revendications précédentes, **caractérisé en ce que** lors de la première passe (P1) on réalise un filtrage sur les priorités (F3), ce filtrage étant appliqué à la première liste (L2) ou à une partie (L3) de celle-ci, le résultat de ce filtrage étant une liste (L4) ne contenant que les tâches dont la priorité est supérieure ou égale à une priorité déterminée.

**5.** Procédé d'ordonnancement de tâches selon la revendication 4, **caractérisé en ce que** le résultat du filtrage sur les priorités (F3) ne contient que les tâches dont la priorité est maximale.

**6.** Procédé d'ordonnancement de tâches selon l'une quelconque des revendications précédentes, **caractérisé en ce que** lors de la première passe (P1) ou de la seconde passe (P2) on réalise un filtrage temporel (F4 ou F7), ce filtrage étant appliqué à la première liste (L2) ou à une partie (L3, L4 ou L6, L7) de celle-ci, le résultat de ce filtrage étant une liste (L5 ou L8) ne contenant que les tâches dont les contraintes temporelles respectent un critère déterminé.

**7.** Procédé d'ordonnancement de tâches selon la revendication 6, **caractérisé en ce que** si toutes les tâches auxquelles est appliqué le filtrage temporel sont des tâches périodiques, le résultat de ce filtrage temporel ne contient que les tâches dont le rapport entre le délai jusqu'à la dernière date d'exécution d'une part, et la période de la tâche d'autre part, est le plus grand.

**8.** Procédé d'ordonnancement de tâches selon l'une quelconque des revendications précédentes, **caractérisé en ce que** la seconde passe (P2) ne comprend pas de filtrage sur les priorités.

**Claims**

**1.** Method of scheduling tasks in which:

- a first pass (P1) is carried out, this first pass being applied to a first list (L2) containing tasks intended to be scheduled, this first pass comprising at least one filtering (F2, F3, F4), a filtering (F2) of this first pass (P1) consisting in retaining only the tasks whose date of activation is less than or equal to the next free time H0 for the execution of a task;
- if on the completion of this first pass (P1) a list (L5) containing at least one task is obtained, the next task to be executed from among the tasks of this list (L5) is chosen;
- otherwise, a second pass (P2) is carried out, this second pass being applied to the first list (L2), the second pass comprising at least one filtering (F5, F6, F7), a filtering (F6) of the second pass (P2) being a filtering on second dates of activations consisting in retaining only the tasks whose second date of activation is less than or equal to the next free time H0 for the execution of a task, these second dates of activations for the non-urgent tasks being less than the dates of activations used during the first pass (P1);

**characterized in that**, for each periodic task, the second date of activation is determined by the relation:

$$T_{act2} = T_{exec} + (1 - \varepsilon) \times T_{rec}$$

where

$T_{act2}$ represents the second date of activation of the task;
$T_{exec}$ represents the last date of activation of the task;
$\varepsilon$ represents a coefficient of fluctuation in relation to the nominal period of the task, this coefficient being strictly less than 1;
$T_{rec}$ represents the nominal period of recurrence of the task.

**2.** Method according to Claim 1, **characterized in that**, if on completion of the second pass (P2) a list (L8) containing at least one task is obtained, the next task to be executed from among the tasks of this list (L8) is chosen.

**3.** Method of scheduling tasks according to any one of the preceding claims, **characterized in that** during the second pass (P2) a filtering (F5) is carried out, this filtering being applied to the first list (L2) or to a part of the latter, the result of this filtering being a list (L6) containing only non-urgent tasks.

4. Method of scheduling tasks according to any one of the preceding claims, **characterized in that** during the first pass (P1) a filtering is carried out on the priorities (F3), this filtering being applied to the first list (L2) or to a part (L3) of the latter, the result of this filtering being a list (L4) containing only the tasks whose priority is greater than or equal to a determined priority.

5. Method of scheduling tasks according to Claim 4, **characterized in that** the result of the filtering on the priorities (F3) contains only the tasks whose priority is highest.

6. Method of scheduling tasks according to any one of the preceding claims, **characterized in that** during the first pass (P1) or the second pass (P2) a temporal filtering (F4 or F7) is carried out, this filtering being applied to the first list (L2) or to a part (L3, L4 or L6, L7) of the latter, the result of this filtering being a list (L5 or L8) containing only the tasks whose temporal constraints comply with a determined criterion.

7. Method of scheduling tasks according to Claim 6, **characterized in that** if all the tasks to which the temporal filtering is applied are periodic tasks, the result of this temporal filtering contains only the tasks for which the ratio of the interlude up to the last date of execution on the one hand, to the period of the task on the other hand, is the largest.

8. Method of scheduling tasks according to any one of the preceding claims, **characterized in that** the second pass (P2) does not comprise any filtering on the priorities.

**Patentansprüche**

1. Verfahren zur Ablaufplanung von Tasks, bei dem:

    - ein erster Durchlauf (P1) durchgeführt wird, wobei dieser erste Durchlauf an eine erste Liste (L2) angewendet wird, die Tasks enthält, deren Ablauf geplant werden soll, wobei dieser erste Durchlauf mindestens eine Filterung (F2, F3, F4) enthält, wobei eine Filterung (F2) dieses ersten Durchlaufs (P1) darin besteht, nur die Tasks zurückzuhalten, deren Aktivierungsdatum unter der nächsten freien Zeit H0 für die Durchführung einer Task liegt oder gleich dieser Zeit ist;
    - wenn am Ende dieses ersten Durchlaufs (P1) eine Liste (L5) erhalten wird, die mindestens eine Task enthält, die nächste auszuführende Task unter den Tasks dieser Liste (L5) ausgewählt wird;
    - ansonsten ein zweiter Durchlauf (P2) durchgeführt wird, wobei dieser zweite Durchlauf an die erste Liste (L2) angelegt wird, wobei der zweite Durchlauf mindestens eine Filterung (F5, F6, F7) enthält, wobei eine Filterung (F6) des zweiten Durchlaufs (P2) eine Filterung von zweiten Aktivierungsdaten ist, die darin besteht, nur die Tasks zurückzuhalten, deren zweites Aktivierungsdatum unter der nächsten freien Zeit H0 zur Ausführung einer Task liegt oder gleich dieser Zeit ist, wobei diese zweiten Aktivierungsdaten für die nicht eiligen Tasks unter den Aktivierungsdaten liegen, die beim ersten Durchlauf (P1) verwendet werden;

    **dadurch gekennzeichnet, dass** für jede periodische Task das zweite Aktivierungsdatum durch folgende Beziehung bestimmt wird:

$$T_{act2} = T_{exec} + (1-\varepsilon) \times T_{rec}$$

    wobei

    $T_{act2}$ das zweite Aktivierungsdatum der Task darstellt;
    $T_{exec}$ das letzte Ausführungsdatum der Task darstellt;
    $\varepsilon$ einen Fluktuationskoeffizienten bezüglich der Nennperiode der Task darstellt, wobei dieser Koeffizient strikt kleiner als 1 ist;
    $T_{rec}$ die Nennperiode der Wiederholungsfrequenz der Task darstellt.

2. Verfahren nach Anspruch 1, **dadurch gekennzeichnet, dass**, wenn am Ende des zweiten Durchlaufs (P2) eine Liste (L8) erhalten wird, die mindestens eine Task enthält, die nächste durchzuführende Task unter den Tasks dieser Liste (L8) ausgewählt wird.

**3.** Verfahren zur Ablaufplanung von Tasks nach einem der vorhergehenden Ansprüche, **dadurch gekennzeichnet, dass** im zweiten Durchlauf (P2) eine Filterung (F5) durchgeführt wird, wobei diese Filterung an die erste Liste (L2) oder einen Teil von ihr angewendet wird, wobei das Ergebnis dieser Filterung eine Liste (L6) ist, die nur nicht eilige Tasks enthält.

**4.** Verfahren zur Ablaufplanung von Tasks nach einem der vorhergehenden Ansprüche, **dadurch gekennzeichnet, dass** im ersten Durchlauf (P1) eine Filterung der Prioritäten (F3) durchgeführt wird, wobei diese Filterung an die erste Liste (L2) oder einen Teil (L3) von ihr angewendet wird, wobei das Ergebnis dieser Filterung eine Liste (L4) ist, die nur die Tasks enthält, deren Priorität höher als eine oder gleich einer bestimmten Priorität ist.

**5.** Verfahren zur Ablaufplanung von Tasks nach Anspruch 4, **dadurch gekennzeichnet, dass** das Ergebnis der Filterung der Prioritäten (F3) nur die Tasks enthält, deren Priorität maximal ist.

**6.** Verfahren zur Ablaufplanung von Tasks nach einem der vorhergehenden Ansprüche, **dadurch gekennzeichnet, dass** beim ersten Durchlauf (P1) oder beim zweiten Durchlauf (P2) eine Zeitfilterung (F4 oder F7) durchgeführt wird, wobei diese Filterung an die erste Liste (L2) oder einen Teil (L3, L4 oder L6, L7) von ihr angewendet wird, wobei das Ergebnis dieser Filterung eine Liste (L5 oder L8) ist, die nur die Tasks enthält, deren Zeitzwänge ein bestimmtes Kriterium respektieren.

**7.** Verfahren zur Ablaufplanung von Tasks nach Anspruch 6, **dadurch gekennzeichnet, dass**, wenn alle Tasks, an die die Zeitfilterung angewendet wird, periodische Tasks sind, das Ergebnis dieser Zeitfilterung nur die Tasks enthält, deren Verhältnis zwischen der Frist bis zum letzten Ausführungsdatum einerseits und der Periode der Task andererseits am größten ist.

**8.** Verfahren zur Ablaufplanung von Tasks nach einem der vorhergehenden Ansprüche, **dadurch gekennzeichnet, dass** der zweite Durchlauf (P2) keine Filterung der Prioritäten aufweist.

Fig. 1

Fig. 2